# EUROPEAN PATENT SPECIFICATION

(11) **EP 1 833 201 B1**
(45) Date of publication and mention of the grant of the patent: **27.01.2010**
(21) Application number: 07103444.1
(22) Date of filing: 02.03.2007
(51) Int. Cl.: H04L 12/28, H04L 12/56

(54) **Method of managing interworking for the transfer of service sessions from a mobile network to a wireless local area network, and corresponding TTG gateway**
Verfahren zum Managen der Zusammenarbeit für den Transfer von Dienstsitzungen von einem Mobilfunknetz zu einem drahtlosen lokalen Netzwerk und TTG-Gateway dafür
Procédé de gestion d'interfonctionnement pour le transfert de sessions de service d'un réseau mobile vers un réseau local sans fil, et passerelle TTG correspondante

(30) Priority: 06.03.2006 FR 0650778
(43) Date of publication of application: 12.09.2007
(73) Proprietor: Alcatel Lucent, 75008 Paris (FR)
(72) Inventor: Gras, Laurence, 91440, BURES SUR YVETTE (FR); Fiat, Lionel, 92380, GARCHES (FR)
(74) Representative: El Manouni, Josiane

(56) References cited:
- US-A1- 2005 130 659
- US-A1- 2005 157 673
- US-A1- 2005 271 013
- US-A1- 2006 019 635

## Description

The invention concerns communication networks, and more precisely interworking between 3GPP mobile communication networks and wireless local area networks (WLAN).

Here "3GPP networks" refers to all communication networks having a 3GPP radio interface providing Internet Protocol (IP) access, and in particular second generation (2G) mobile (or cellular) networks, such as GSM networks, for example, 2.5G mobile (or cellular) networks, such as GPRS/EDGE networks, for example, and third generation (3G) mobile (or cellular) networks, such as UMTS or CDMA2000 networks, for example, as well as all their variants.

Moreover, "wireless local area networks" refers here to all communication local area networks having a WLAN radio interface providing IP access, and in particular WiFi and WiMAX networks.

Furthermore, "interworking (3GPP/WLAN)" refers here to the facility offered to a WLAN network of utilizing certain 3GPP core network infrastructures to enable the user of a hybrid (3GPP/WLAN) mobile station connected to that WLAN network to access packet services offered by one or more Internet service providers (ISP).

As the man skilled in the art knows, six 3GPP/WLAN interworking scenarios have been proposed by the 3GPP. Of those six scenarios, the third concerns access from hybrid (3GPP/WLAN) mobile stations connected to a WLAN network to services offered by one or more Internet service providers and accessible via a 3GPP network. As is described in particular in the 3GPP technical specifications TS 23.234, this access necessitates, on the one hand, establishing an end-to-end tunnel, for example of VPN/lpsec type, between the mobile station and a tunnel termination gateway (TTG) belonging to the 3GPP core network providing access to the service, and, on the other hand, establishing a tunnel, for example of GPRS tunneling protocol (GTP) type, between the TTG gateway and a gateway GPRS support node (GGSN) providing the connection of said 3GPP core network to the IP network offering the service.

This type of access is entirely suitable for situations in which the mobile station utilizes a service via the radio interface of a WLAN network. However, it is not suited to mobility and in particular to the case where the mobile station that is utilizing a service via the radio interface of a 3GPP network and a serving GPRS support node (SGSN) connected to the GGSN node that provides the connection to the IP network offering the service is constrained to connect to a WLAN network. In this case, the service cannot be maintained upon transfer ("handover") of the communication session that it is utilizing from the 3GPP radio access network to the WAN radio access network. The initial communication session (set up via the 3GPP radio interface) must then be interrupted and a new communication session set up via the WLAN network. In other words, the third scenario does not maintain continuity of service upon transfer between 3GPP and WLAN radio access networks.

The fourth 3GPP scenario undoubtedly maintains the continuity of service during the transfer between 3GPP and WLAN radio access networks, but it does not specify how this may be effected.

Document US 2005/157673 A1 discloses an interface for connecting networks includes an interworking function provided between a wireless local area network (WLAN) and a public mobile land network (PLMN) to provide communication interactions between the PLMN and the WLAN. The interworking function includes a dual-protocol stack, which interfaces the WLAN protocols and PLMN protocols to provide seamless communications between the WLAN and the PLMN such that an increase in available service bandwidth provided for users of the PLMN is maintained.

An object of the invention is therefore to propose a solution for maintaining the continuity of service upon the transfer of a communication session (involving a service) between a 3GPP radio access network and a WLAN radio access network.

To this end it proposes a method dedicated to managing interworking between a wireless local area network (WLAN) and a 3GPP mobile network, consisting in, when a tunnel termination gateway of the mobile network receives an end-to-end tunnel establishment request sent by a mobile station at the time of an attempt to transfer from the mobile network to the WLAN network a communication session relating to a service involving that mobile station and an SGSN node and a GGSN node of the mobile network:
i) transmitting to an Authentication, Authorization and Accounting (AAA) server of the mobile network a message requesting location information for the SGSN node,
ii) recovering from a location server of the mobile network, by means of the AAA server, the requested location information in order to transmit it to the tunnel termination gateway,
iii) in the case of reception by the tunnel termination gateway of an authorization to establish the tunnel (of end-to-end type) and the location information, transmitting to the SGSN node a message requesting at least a portion of a service context of the mobile station, and
iv) in the case of reception of the service context by the tunnel termination gateway, establishing the end-to-end tunnel between the latter and the mobile station and a tunnel (of GTP type, for example) between the tunnel termination gateway and the GGSN node to ensure that continuity of service is maintained during transfer of the communication session from the mobile network to the WLAN network.

The method according to the invention may have other features and in particular, separately or in combination:
- in the step iv) the tunnel termination gateway may generate a message containing information signaling that it has been substituted for the SGSN node for managing the service involving the mobile station and the GGSN node, then transmit the message to the AAA server in order for it to update the location information in the location server as a function of the updating information received;
   ➢ the signaling message may contain the IP address and/or the ISDN identifier of the tunnel termination gateway;
   ➢ the tunnel termination gateway may generate the message containing updating information when it receives a message of confirmation of updating of Packet Data Protocol (PDP) context information from the GGSN node;
   ➢ after updating the location information the AAA server may transmit an updating confirmation message to the tunnel termination gateway;
- in the step iii) the tunnel termination gateway may transmit to the SGSN node a message requesting at least information defining the current service used by the mobile station and at least one communication identifier from the GGSN node;
- in the step i) the tunnel termination gateway may transmit to the AAA server a message simultaneously requesting the end-to-end tunnel establishment authorization and the location information;
- in the step ii) the AAA server may transmit to the tunnel termination gateway an authorization message containing both the end-to-end tunnel establishment authorization and the location information;
- the location information may define the IP address and/or the ISDN identifier of the SGSN node.

The invention also proposes a tunnel termination gateway for a 3GPP mobile communication network, comprising:
- processing means responsible, when they receive an end-to-end tunnel establishment request from a mobile station at the time of an attempt to transfer from the mobile network to a WLAN network a communication session relating to a service involving that mobile station and SGSN and GGSN nodes of the mobile network, for generating a message to an AAA server of the mobile network requesting location information for the SGSN node, and, when they receive an authorization for establishing the tunnel and the location information from the AAA server, for generating a message to the SGSN node requesting at least a portion of a service context of the mobile station, and
- tunnel establishing means responsible, when they receive the context, for establishing the end-to-end tunnel with the mobile station and a tunnel (of GTP type, for example) with the GGSN node, to ensure the continuity of the service during transfer of the communication session from the mobile network to the WLAN network.

This tunnel termination gateway may have other features and in particular, separately or in combination:
- its processing means may be responsible for generating a message to the AAA server containing information signaling that their gateway has been substituted for the SGSN node for the management of the service involving the mobile station and the GGSN node, in order for the AAA server to update the location information stored in a location server of the mobile network as a function of the updating information transmitted;
   ➢ its processing means may be responsible for generating a signaling message to the AAA server containing an IP address and/or an ISDN identifier of their gateway;
   ➢ its processing means may be responsible for generating the message containing updating information when they receive a PDP context information updating confirmation message from the GGSN node;
- its processing means may be responsible for generating a message to the SGSN node requesting at least information defining the current service station and at least one communication identifier from the GGSN node;
- its processing means may be responsible for generating a message to the AAA server simultaneously requesting the end-to-end tunnel establishment authorization and the location information;
- the location information may define an IP address and/or an ISDN identifier of the SGSN node.

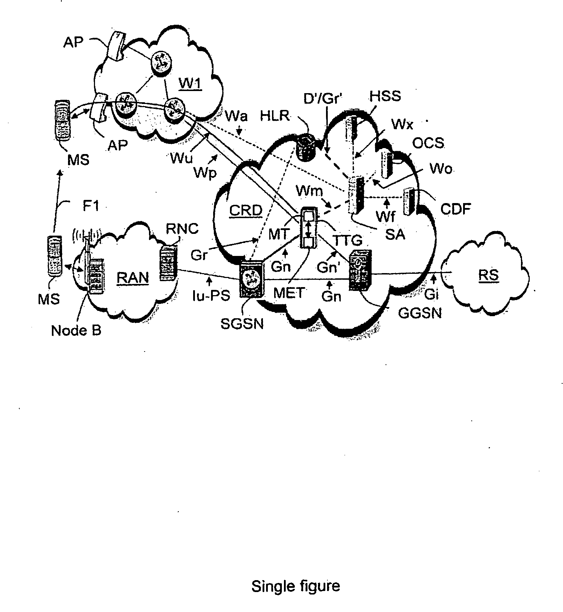

Other features and advantages of the invention will appear on reading the following detailed description and examining the appended drawing, in which the single figure shows very diagrammatically and functionally a 3GPP mobile network comprising a 3GPP radio access network and a 3GPP core network provided with one embodiment of a tunnel termination gateway according to the invention and connected to a service network and to a WLAN radio access network. The appended drawing constitutes part of the description of the invention as well as contributing to the definition of the invention, if necessary.

An object of the invention is to maintain the continuity of service upon the transfer of a communication session (implying a service utilized by a mobile station) from a 3GPP radio access network to a WLAN radio access network.

It is considered hereinafter by way of illustrative and nonlimiting example that the 3GPP radio access network belongs to a UMTS type 3GPP mobile (or cellular) network. However, the invention is not limited to this type of mobile network. In fact it concerns all communication networks having a 3GPP radio interface providing IP access and in particular 2G networks (for example GSM networks), 2.5G networks (for example GPRS/EDGE networks), and 3G networks (for example UMTS or CDMA2000), as well as all their variants.

It is further considered hereinafter by way of illustrative and nonlimiting invention that the WLAN radio access network is part of a WiFi or WiMAX type wireless local area network (WLAN). However, the invention is not limited to this type of WLAN network. In fact it concerns all wireless local area networks having a WLAN radio interface enabling IP access.

The invention proposes a method dedicated to the management of interworking between a wireless local area network (WLAN) and a 3GPP mobile network. That method may be implemented by means of a network architecture of the type shown in the single figure and comprising a 3GPP core network CRD, a network (or set) of packet services offered by one or more Internet service providers (ISP), at least one 3GPP radio access network RAN, and at least one WLAN radio access network W1 of a WLAN network.

It is considered hereinafter that the 3GPP radio access network RAN and the 3GPP core network CRD are parts of the same UMTS network of which the users of mobile stations MS are clients. Consequently, the 3GPP core network CRD constitutes a home core network for the mobile stations MS.

It is important to note that the invention concerns only mobile stations MS of the 3GPP/WLAN hybrid type, that is to say including a communication card (for example of UICC type provided with a (U)SIM) enabling them to be connected both to WLAN radio access networks (WAN) and 3GPP radio access networks (RAN). It may therefore be a question of any type of mobile communication equipment and in particular a mobile telephone, a laptop computer or a personal digital assistant (PDA) equipped with a card of the type cited above.

The method according to the invention must be executed each time that a mobile station MS has set up a communication session with a network (or set) of services RS via a 3GPP radio access network RAN (where applicable a visited RAN) and at least its home core network CRD, in order to utilize a service, and the mobile station MS has to be connected to a WLAN radio access network W1 in order to continue the communication session utilized for said service.

The procedure for setting up the initial communication session via the 3GPP radio access network RAN is well known to the man skilled in the art. It will therefore not be described in detail here. Suffice to say that:
- the mobile station MS is connected to the 3GPP radio access network RAN via one of its base stations, called a Node B in the case of a UMTS network,
- the connection Node B is connected to a controller, called a radio network controller (RNC) in the case of a UMTS network, that is also part of the 3GPP radio access network RAN,
- the connection RNC is connected to the 3GPP core network CRD via one of its serving GPRS support nodes (SGSN) and via an interface called the Iu-PS interface,
- the SGSN node has at least one IP address and generally an ISDN number (or identifier), and is connected, via a tunnel that is preferably a GPRS tunneling protocol (GTP) type tunnel, using an interface called the Gn interface, to a gateway GPRS support node (GGSN) that is also part of the 3GPP core network CRD and serves as an access point, via an interface called the Gi interface, to one or more packet-switched (PS) services offered, for example, by at least one application server of a service network RS,
- when a communication session is set up for a mobile station MS, the SGSN node concerned transmits, via an interface called the Gr interface, an identifier of the mobile station MS and at least its own IP address, and generally its own ISDN number (or identifier), to a location server, called the home location register (HLR) in the case of a UMTS network, in order for it to store them in corresponding relationship to each other.

When the mobile station MS is being prepared to quit the 3GPP radio access network RAN in order to be connected to a WLAN radio access network W1 (arrow F1 in the single figure), it starts a communication session transfer (handover) procedure.

That procedure first necessitates the mobile station MS to find the IP address of a tunnel termination gateway TTG belonging to the 3GPP core network CRD and involved in the future GTP tunnel. For this purpose it executes a domain name system (DNS) request. Then, once it has the IP address of the gateway TTG, the mobile station MS transmits to the gateway TTG, via an access point AP of the WLAN radio access network W1, an end-to-end tunnel establishment request conforming to the 3GPP technical specifications TS 23.234, this request including in particular User-ID and W-APN fields.

The end-to-end tunnel to be established is a VPN/lpsec type tunnel, for example.

It is more precisely at this stage that the method according to the invention becomes operative.

An objective of the method is to enable a tunnel termination gateway TTG to take over from an SGSN node that is involved in a communication session of a mobile station MS used for a service via a 3GPP radio access network RAN when a mobile station MS quits the 3GPP radio access network RAN in order to be connected to a WLAN radio access network W1. This necessitates the gateway TTG to determine the identity of the SGSN node concerned in order to recover therefrom the context that defines the service used by this mobile station MS, since the gateway TTG can pass itself off as an SGSN node to the GGSN node serving as the service access point.

More precisely, when the gateway TTG receives the end-to-end tunnel establishment request (designating the required service) from a mobile station MS, it requests location information for the SGSN node that is involved in the communication session that is the subject of the transfer from an authentication, authorization and accounting (AAA) server SA of the 3GPP core network CRD via an interface called the Wm interface.

This can be done by means of a dedicated message (or request) designating the mobile station MS requiring the tunnel, after first obtaining a tunnel establishment authorization from the AAA server SA, in accordance with the 3GPP technical specifications TS 23.234 and TS 29.234 (subject to a few adaptations, such as adding fields and/or messages, possibly dedicated ones, for example).

It must be remembered that a tunnel can be established between a mobile station MS and a gateway TTG only if the AAA server SA has verified, via a subscription information server called the home subscriber server (HSS), to which it is connected via an interface called the Wx interface, on the one hand, if the user of the mobile station MS is authorized, by his subscription, to access the designated service, and, on the other hand, if the network architecture and the applicable policy rules allow it. This is called the authentication procedure (defined by the 3GPP technical specifications TS 29.234). If the result of the authentication procedure is positive, the AAA server SA can authorize the gateway TTG to establish the end-to-end tunnel with the mobile station MS. It then transmits a standard authorization message to it via the interface Wm. The gateway TTG then generates its dedicated message (or request), which designates the mobile station MS requiring the tunnel and requests location information for the SGSN node involved in the communication session that is the subject of the transfer. It then transmits this message (or request) to the AAA server SA via the interface Wm.

As shown in the single figure, the gateway TTG may include a processor module MT responsible for generating the tunnel establishment authorization messages (or requests) and for obtaining location information for an SGSN node.

When the AAA server SA receives the request for location information for the SGSN node, it accesses the location server HLR, to which it is connected via an interface called the D'/Gr' interface, in order to look up location information for the SGSN node stored since the setting up of the communication session via said SGSN node in corresponding relationship to the identifier of the mobile station MS contained in the request.

For example, the AAA server SA extracts from the location server HLR the IP address of the SGSN node and where appropriate its ISDN number (or identifier).

In this first embodiment, once in possession of the required location information, the AAA server SA preferably generates a dedicated response message that contains the information and then transmits it to the gateway TTG via the interface Wm.

In one variant, the gateway TTG can simultaneously effect the tunnel establishment authorization request and the request to obtain location information for the SGSN node concerned from the AAA server SA via the interface Wm. For this purpose, the standard tunnel establishment authorization request may be adapted, for example, so that it comprises, in addition to the designation of the mobile station MS, at least one field dedicated to the request to obtain location information for the SGSN node concerned.

The processor module MT is then made responsible for generating the appropriate tunnel establishment authorization request in order for it to be transmitted to the AAA server SA via the interface Wm.

When the AAA server SA receives the appropriate tunnel establishment authorization request, it first executes the authentication procedure described hereinabove and then, if the result is positive, accesses the location server HLR via the interface D'/Gr' in order to look up the required location information for the SGSN node stored since the communication session was set up via said SGSN node in corresponding relationship to the identifier of the mobile station MS contained in the request previously received.

Once in possession of the required location information, the AAA server SA may, for example, generate an appropriate authorization response message that contains, in addition to the standard fields dedicated to the tunnel establishment authorization, at least one additional field dedicated to the location information for the SGSN node concerned, determined in the server HLR. For example, there may be added to a standard response message (defined by TS 23.234) a field containing the IP address of the SGSN node and a field containing the ISDN number of said SGSN node.

The AAA server SA then transmits the response message to the gateway TTG via the interface Wm.

When the gateway TTG has the end-to-end tunnel establishment authorization and the location information for the SGSN node, its processor module MT is then in a position to send that SGSN node, via an interface called the Gn interface, a dedicated message requesting it to transmit to it at least a portion of the context of the service utilized by the mobile station MS.

That portion of the context of the service that must at least be recovered is the definition of the current service, and in particular the IP address of the GGSN node that serves as access point to the service, and where appropriate the ISDN number (or identifier) of said GGSN node (the IP address and the ISDN number form what is generally called the PDP context).

When the SGSN node receives the context obtaining message, it generates a response message into which it integrates the information defining the portion of the context of the service that is at least required, and then transmits this response message to the gateway TTG via the interface Gn. In fact, the SGSN node sends a response message containing security information (MM context) and information relating to the current service (PDP context).

On reception of this response message, the gateway TTG is then in a position, on the one hand, to establish an end-to-end tunnel with the mobile station MS that transmitted to it the tunnel establishment request, via an interface called the Wu interface, or in parallel with the latter, and, on the other hand, to establish a tunnel with the GGSN node whose IP address it has just recovered, where applicable with the ISDN number, from the SGSN node, via an interface called the Gn' interface.

The end-to-end tunnel that is established with the mobile station MS is of VPN/IPsec type, for example.

The tunnel that is established with the GGSN node is of the GPRS tunneling protocol (GTP) type, for example. Establishing this (GTP) tunnel releases the previous GTP tunnel, until this point established between the GGSN and SGSN nodes for the communication session concerned.

Preferably, once the tunnels have actually been established, the location information is updated.

For this purpose, the processor module MT of the gateway TTG generates a message that contains information indicating that it has been substituted for the SGSN node for the purposes of managing the service involving the mobile station MS and the GGSN node.

The signaling message contains at least an identifier of the mobile station MS and the IP address of the gateway TTG, and where appropriate the ISDN number (or identifier) of that gateway TTG. It preferably also contains a wireless access point name (W-APN) identifier and routing information designating the name of the AAA server SA (obtained, for example, in an "Origin-Host AVP" field contained in a message previously received).

Moreover, the signaling message is preferably generated by the gateway TTG once it has transmitted to the GGSN node a request for updating of context information relating to the communication session (of "Update Packet Data Protocol (PDP) Context Request" type), and has received a message confirming updating of PDP context information from the GGSN node. This confirmation message is generated by the GGSN node once it has replaced the IP address of the SGSN node with the IP address of the gateway TTG in the PDP context field of its GTP routing table.

Once the signaling (or updating) message has been generated by its processor module MT, the gateway TTG transmits it to the AAA server SA via the interface Wm.

The AAA server SA then transmits to the location server HLR, via the interface D'/Gr', an update message containing at least the received location information (lP address and/or ISDN number of the gateway TTG) and the identifier of the mobile station MS. On receipt of this updating message the location server HLR can then replace the old location information (relating to the SGSN node) with that received (relating to the gateway TTG that has been substituted for said SGSN node). The new location information is then stored in corresponding relationship to the identifier of the mobile station MS.

After updating the location information in the location server HLR, the AAA server SA preferably transmits an updating confirmation message to the gateway TTG via the interface Wm.

In parallel with this, once the location server HLR has been updated by the AAA server SA, it preferably transmits to the SGSN node a "Cancel Location" type request to cancel the connection that it has set up with the mobile station MS. Then, once the SGSN node has canceled the connection, it preferably transmits to the location server HLR a "Cancel Location Ack" cancellation confirmation message.

The gateway TTG then transmits to the mobile station MS a "Tunnel Establishment Ack" message acknowledging establishing of the end-to-end tunnel in order to terminate with it the establishing of said end-to-end tunnel.

As is shown in the single figure, the gateway TTG has for example a tunnel establishing module MET responsible for establishing the end-to-end tunnels (for example of VPN/IPsec type) and the GTP tunnels (for example).

Once both tunnels have been established, continuity of service is then maintained for the mobile station MS during the transfer of the communication session from the 3GPP mobile network to the WLAN network.

The tunnel establishing module MET and the processor module MT of the gateway TTG may be produced in the form of electronic circuits, software (or electronic data processing) modules, or a combination of circuits and software.

The invention is not limited to the tunnel termination gateway (TTG), AAA server, SGSN node and management method embodiments described hereinabove by way of example only and encompasses all variants that the man skilled in the art might envisage within the scope of the following claims.

## Claims

1. Method of managing interworking between a wireless local area network and a mobile network, **characterized in that** it consists in, in the case of reception by a tunnel termination gateway (TTG) of said mobile network of an end-to-end tunnel establishment request sent by a mobile station (MS) at the time of an attempt to transfer from said mobile network to said wireless local area network a communication session relating to a service involving that mobile station (MS) and SGSN and GGSN nodes of said mobile network, i) transmitting to an AAA server (SA) of said mobile network a message requesting location information for said SGSN node, ii) recovering from a location server (HLR) of said mobile network, by means of said AAA server (SA), said requested location information in order to transmit it to said tunnel termination gateway (TTG), iii) in the case of reception by said tunnel termination gateway (TTG) of an authorization to establish said tunnel and said location information, transmitting to said SGSN node a message requesting at least a portion of a service context of said mobile station (MS), and iv) in the case of reception of said context by said tunnel termination gateway (TTG), establishing said end-to-end tunnel between the latter and said mobile station (MS) and a tunnel between said tunnel termination gateway (TTG) and said GGSN node to ensure the continuity of said service during said communication session transfer.

2. Method according to claim 1, **characterized in that** in the step iv) said tunnel termination gateway (TTG) generates a message containing information signaling that it has been substituted for said SGSN node for managing said service involving said mobile station (MS) and said GGSN node, then transmits said message to said AAA server (SA) in order for it to update said location information in said location server (HLR) as a function of said updating information received.

3. Method according to claim 2, **characterized in that** said signaling message contains an IP address and/or an ISDN identifier of said tunnel termination gateway (TTG).

4. Method according to either of claims 2 and 3, **characterized in that** said tunnel termination gateway (TTG) generates said message containing updating information on reception of a message of confirmation of updating of PDP context information by said GGSN node.

5. Method according to any one of claims 2 to 4, **characterized in that** after updating said location information said AAA server (SA) transmits an updating confirmation message to said tunnel termination gateway (TTG).

6. Method according to any one of claims 1 to 5, **characterized in that** in the step iii) said tunnel termination gateway (TTG) transmits to said SGSN node a message requesting at least information defining said current service from said mobile station (MS) and at least one communication identifier from said GGSN node.

7. Method according to any one of claims 1 to 6, **characterized in that** in the step i) said tunnel termination gateway (TTG) transmits to said AAA server (SA) a message simultaneously requesting said end-to-end tunnel establishment authorization and said location information.

8. Method according to any one of claims 1 to 7, **characterized in that** in the step ii) said AAA server (SA) transmits to said tunnel termination gateway (TTG) an authorization message containing both said end-to-end tunnel establishment authorization and said location information.

9. Method according to any one of claims 1 to 8, **characterized in that** said location information defines an IP address and/or an ISDN identifier of said SGSN node.

10. Method according to any of claims 1 to 9, **characterized in that** in the step iv) a GTP tunnel is established between said tunnel termination gateway (TTG) and said GGSN node.

11. Tunnel termination gateway (TTG) for a mobile communication network, **characterized in that** it comprises:
- processing means (MT) adapted, in the case of reception of an end-to-end tunnel establishment request sent by a mobile station (MS) at the time of an attempt to transfer from said mobile network to a wireless local area network a communication session relating to a service involving that mobile station (MS) and SGSN and GGSN nodes of said mobile network, i) to generate a message to an AAA server (SA) of said mobile network requesting location information for said SGSN node, and ii) in the case of reception of an authorization for establishing said tunnel and said location information from said AAA server (SA), to generate a message to said SGSN node requesting at least a portion of a service context of said mobile station (MS), and
- tunnel establishing means (MET) adapted, in the case of reception of said context, to establish said end-to-end tunnel with said mobile station (MS) and a tunnel with said GGSN node, to ensure the continuity of said service during said communication session transfer.

12. Gateway according to claim 11, **characterized in that** said processing means (MT) are adapted to generate a message to said AAA server (SA) containing information signaling that said gateway has been substituted for said SGSN node for the management of said service involving said mobile station (MS) and said GGSN node, in order for said AAA server (SA) to update said location information in a location server (HLR) of said mobile network as a function of said updating information transmitted.

13. Gateway according to claim 12, **characterized in that** said processing means (MT) are adapted to generate a signaling message to said AAA server (SA) containing an IP address and/or an ISDN identifier of their gateway (TTG).

14. Gateway according to either of claims 12 and 13, **characterized in that** said processing means (MT) are adapted to generate said message containing updating information on reception of a PDP context information updating confirmation message from said GGSN node.

15. Gateway according to any one of claims 11 to 14, **characterized in that** said processing means (MT) are adapted to generate a message to said SGSN node requesting at least information defining said current service from said mobile station (MS) and at least one communication identifier from said GGSN node.

16. Gateway according to any one of claims 11 to 15, **characterized in that** said processing means (MT) are adapted to generate a message to said AAA server (SA) simultaneously requesting said end-to-end tunnel establishment authorization and said location information.

17. Gateway according to any one of claims 11 to 16, **characterized in that** said location information defines an IP address and/or an ISDN identifier of said SGSN node.

18. Gateway according to any one of claims 11 to 17, **characterized in that** said tunnel establishing means (MET) are adapted to establish a GTP tunnel with said GGSN node.

## Patentansprüche

1. Verfahren zum Verwalten des Zusammenwirkens zwischen einem drahtlosen lokalen Netzwerk und einem Mobilfunknetz, **dadurch gekennzeichnet, dass** es darin besteht, im Fall des Empfangs, an einem Tunnelabschluss-Gateway (TTG) des besagten Mobilfunknetzes, einer von einer Mobilstation (MS) zum Zeitpunkt eines Versuchs, eine Kommunikationssitzung, welche einen Dienst betrifft, an welchem diese Mobilstation (MS) und die SGSN- und GGSN-Knoten des besagten Mobilfunknetzes beteiligt sind, von dem besagten Mobilfunknetz an das besagte drahtlose lokale Netzwerk zu übertragen, gesendeten Anforderung für den Aufbau eines Ende-zu-Ende-Tunnels i) an einen AAA-Server (SA) des besagten Mobilfunknetzes eine Nachricht, weiche die Ortsinformation für den besagten SGSN-Knoten anfordert, zu übertragen, ii) die besagte angeforderte Ortsinformation anhand eines AAA-Servers (SA) von einem Ortsserver (HLR) des besagten Mobilfunknetzes wiederherzustellen, um sie an das Tunneiabsehtuss-Oateway (TTG) zu übertragen, iii) im Fall des Empfangs, am besagten Tunnelabschluss-Gateway (TTG), einer Genehmigung für den Aufbau des besagten Tunnels und der besagten Ortsinformation, eine Nachricht, welche mindestens einen Teil eines Dienstkontextes der besagten Mobilfunkstation (MS) anfordert, an den besagten SGSN-Knoten zu übertragen, und iv) im Fall des Empfangs des besagten Kontextes am besagten Tunnelabschluss-Gateway (TTG), den besagten Ende-zu-Ende-Tunnel zwischen letzterem und der besagten Mobilfunkstation (MS) sowie einen Tunnel zwischen dem besagten Tunnelabschluss-Gateway (TTG) und dem besagten GGSN-Knoten aufzubauen, um die Kontinuität des besagten Dienstes während der besagten Kommunikationeitzungsübertragung zu gewährleisten.

2. Verfahren nach Anspruch 1, **dadurch gekennzeichnet, dass** in Schritt iv) das besagte Tunnelabschluss-Gateway (TTG) eine Nachricht erzeugt, weiche Informationen enthält, die signalisieren, dass es den besagten SGSN-Knoten für die Verwaltung des besagten Dienstes, an welchen die besagte Mobilstation (MS) und der besagte GGSN-Knoten beteiligt sind, ersetzt, und anschließend die besagte Nachricht an den besagten AAA-Server (SA) sendet, damit er die besagten Ortsinformation in dem besagten Ortsserver (HLR) entsprechend der besagten empfangenen Aktualisierungsinformation aktualisert.

3. Verfahren nach Anspruch 2, **dadurch gekennzeichnet, dass** die besagte Signalisierungsnachricht eine IP-Adresse und/oder eine ISDN-Kennung des besagten Tunnelabschluss-Gateways (TTG) enthält.

4. Verfahren nach einem der Ansprüche 2 und 3, **dadurch gekennzeichnet, dass** das besagte Tunnelabschluss-Gateway (TTG) die besagte Nachricht, welche die Aktualisierungsinformation enthält, nach dem Empfang, an dem besagten GGSN-Knoten, einer Nachricht zur Bestätigung der Aktualisierung der PDP-Kontextinformation erzeugt.

5. Verfahren nach einem beliebigen der Ansprüche 2 bis 4, **dadurch gekennzeichnet, dass** der besagte AAA-Server (SA) nach der Aktualisierung der besagten Ortsinformation eine Aktualisierungsbestätigungsnachricht an das besagte Tunnelabschluss-Gateway (TTG) sendet.

6. Verfahren nach einem beliebigen der Ansprüche 1 bis 5, **dadurch gekennzeichnet, dass** in Schritt iii) das besagte Tunnelabschluss-Gateway (TTG) eine Nachricht, welche mindestens Informationen, die den besagten aktuellen Dienst definieren, von der besagten Mobilstation (MS) und mindestens eine Kommunikationskennung von dem besagten GGSN-Knoten anfordert, an den besagten SGSN-Knoten übermittelt.

7. Verfahren nach einem beliebigen der Ansprüche 1 bis 6, **dadurch gekennzeichnet, dass** in Schritt i) das besagte Tunneiabschluss-Gateway (TTG) eine Nachricht, welche gleichzeitig die Genehmigung für den Aufbau des Ende-zu-Ende-Tunnels und die besagte Ortsinformation anfordert, an den AAA-Server (SA) sendet.

8. Verfahren nach einem beliebigen der Ansprüche 1 bis 7, **dadurch gekennzeichnet, dass** in Schritt ii) der besagte AAA-Server (SA) eine Genehmigungsnachricht, welche sowohl die besagte Genehmigung für den Aufbau des Ende-zu-Ende-Tunnels als auch die besagte Ortsinformation enthält, an das besagte Tunnelabschluss-Gateway (TTG) sendet.

9. Verfahren nach einem beliebigen der Ansprüche 1 bis 8, **dadurch gekennzeichnet, dass** die besagte Ortsinformation eine IP-Adresse und/oder eine ISDN-Kennung des besagten SGSN-Knotens definiert.

10. Verfahren nach einem beliebigen der Ansprüche 1 bis 9, **dadurch gekennzeichnet, dass** in Schritt iv) ein GTP-Tunnel zwischen dem besagten Tunnelabschluss-Gateway (TTG) und dem besagten GGSN-Knoten aufgebaut wird,

11. Tunnelabschluss-Gateway (TTG) für ein Mobilfunknetz, **dadurch gekennzeichnet, dass** es umfasst:
- Verarbeitungsmittel (MT) welche dazu ausgelegt sind, im Fall des Empfangs einer von einer Mobilstation (MS) zum Zeitpunkt eines Versuchs, eine Kommunikationssitzung, welche einen Dienst betrifft, an welchem, diese Mobilstation (MS) und die SGSN- und GGSN-Knoten des besagten Mobilfunknetzes beteiligt sind, von dem besagten Mobilfunknetz an das besagte drahtlose lokale Netzwerk zu übertragen, gesendeten Anforderung für den Aufbau eines Ende-zu-Ende-Tunnels i) eine Nachricht an einen AAA-Server (SA) des besagten Mobilfunknetzes zu erzeugern, welche eine Ortsinformation für den besagten SGSN-Knoten anfordert, zu erzeugen, und ii) im Fall des Empfangs einer Genehmigung für den Aufbau des besagten Tunnels und der besagten Ortsinformation von dem besagten AAA-Server (SA), eine Nachricht an den besagten SGSN-Knoten zu erzeugen, welche mindestens einen Teil eines Dienstkontextes der besagten Mobilstation (MS) anfordert, und
- Mittel zum Aufbauen eines Tunnels (MET), welche dazu ausgelegt sind, im Fall des Empfangs des besagten Kontextes den besagten Ende-zu-Ende-Tunnel mit der besagten Mobilstation (MS) sowie einen Tunnel mit dem besagten GGSN-Knoten aufzubauen, um die Kontinuität des besagten Dienstes während der besagten Kommunikationssitzungsübertragung zu gewährleisten.

12. Gateway nach Anspruch 11, **dadurch gekennzeichnet, dass** die besagten Verarbeitungsmittel (MT) dazu ausgelegt sind, eine Nachricht an den besagten AAA-Server (SA) zu erzeugen, weiche die Signalisierungsinformation, dass das besagte Gateway den besagten SGSN-Knoten für die Verwaltung des besagten Dienstes, an welchem die besagte Mobilstation (MS) und der besagte GGSN-Knoten beteiligt sind, ersetzt, enthält, damit der besagte AAA-Server (SA) die besagte Ortsinformation in einem Ortsserver (HLR) des besagten Mobilfunknetzwerks entsprechend der besagten übertragenen Aktualisierungsinformation aktualisiert.

13. Gateway nach Anspruch 12, **dadurch gekennzeichnet, dass** die besagten Verarbeitungsmittel dazu ausgelegt sind, eine Signalisierungsnachricht an den besagten AAA-Server (SA) zu erzeugen, weiche eine IP-Adresse und/oder eine ISDN-Kennung deren Gateway (TTG) enthält.

14. Gateway nach Anspruch 12 oder 13, **dadurch gekennzeichnet, dass** die besagten Verarbeitungsmittel (MT) dazu ausgelegt sind, die besagte Nachricht, weiche die Aktualisierungsinformation enthält, bei Empfang einer PDP-Kontextinformations-Aktualisierungsbestätigungsnachricht von dem besagten GGSN-Knoten zu erzeugen,

15. Gateway nach einem beliebigen der Ansprüche 11 bis 14, **dadurch gekennzeichnet, dass** die besagten Verarbeitungsmittel (MT) dazu ausgelegt sind, eine Nachricht, welche mindestes Informationen, die den besagten aktuellen Dienst definieren, von der Mobilstation (MS) und mindestens eine Kommunikationskennung von dem besagten GGSN-Knoten anfordert, an den besagten SGSN-Knoten zu erzeugen,

16. Gateway nach einem beliebigen der Ansprüche 11 bis 15, **dadurch gekennzeichnet, dass** die besagten Verarbeitungsmittel (MT) dazu ausgelegt sind, eine Nachricht, welche gleichzeitig die besagte Genehmigung für den Aufbau eines Ende-zu-Ende-Tunnels und die besagte Ortsinformation anfordert, an den besagten AAA-Server (SA) zu erzeugen.

17. Gateway nach einem beliebigen der Ansprüche 11 bis 16. **dadurch gekennzeichnet, dass** die besagte Ortinformation eine IP-Adresse und/oder eine ISDN-Kennung des besagten SGSN-Knotens definiert.

18. Gateway nach einem beliebigen der Ansprüche 11 bis 17, **dadurch gekennzeichnet, dass** die besagten Mittel zum Aufbauen eines Tunnels (MET) dazu ausgelegt sind, einen GTP-Tunnel mit dem besagten GGSN-Knoten aufzubauen.

## Revendications

1. Procédé de gestion de l'interfonctionnement entre un réseau local sans fil et un réseau mobile, **caractérisé en ce qu'**il consiste, dans le cas de la réception par une passerelle de terminaison de tunnel (TTG) dudit réseau mobile d'une demande d'établissement d'un tunnel de bout en bout envoyée par une station mobile (MS) au moment d'une tentative de transfert depuis ledit réseau mobile vers ledit réseau local sans fil d'une session de communication en rapport avec un service impliquant cette station mobile (MS) ainsi que les noeuds SGSN et GGSN dudit réseau mobile, à i) Transmettre à un serveur AAA (SA) dudit réseau mobile un message demandant une information d'emplacement pour ledit noeud SGSN, ii) Récupérer auprès d'un serveur d'emplacement (HLR) dudit réseau mobile, au moyen dudit serveur AAA (SA), ladite information d'emplacement demandée afin de la transmettre à ladite passerelle de terminaison de tunnel (TTG), et dans le cas de la réception par ladite passerelle de terminaison de tunnel (TTG) d'une autorisation d'établissement dudit tunnel et de ladite information d'emplacement, à iii) Transmettre audit noeud SGSN un message demandant au moins une partie d'un contexte de service de ladite station mobile (MS), et dans le cas de la réception dudit contexte par ladite passerelle de terminaison de tunnel (TTG), à iv) Établir ledit tunnel de bout en bout entre cette dernière et ladite station mobile (MS) ainsi qu'un tunnel entre ladite passerelle de terminaison de tunnel (TTG) et ledit noeud GGSN pour garantir la continuité dudit service pendant le transfert de ladite session de communication.

2. Procédé selon la revendication 1, **caractérisé en ce que** dans l'étape iv), ladite passerelle de terminaison de tunnel (TTG) génère un message contenant une information qui signale qu'elle a été remplacée pour ledit noeud SGSN pour gérer ledit service impliquant ladite station mobile (MS) et ledit noeud GGSN, puis transmet ledit message audit serveur AAA (sua) afin qu'il puisse mettre à jour ladite information d'emplacement dans ledit serveur d'emplacement (HLR) en fonction de ladite information de mise à jour reçue.

3. Procédé selon la revendication 2, **caractérisé en ce que** ledit message de signalisation contient une adresse IP et/ou un identifiant RNIS de ladite passerelle de terminaison de tunnel (TTG).

4. Procédé selon l'une quelconque des revendications 2 et 3, **caractérisé en ce que** ladite passerelle de terminaison de tunnel (TTG) génère ledit message contenant l'information de mise, à jour sur réception d'un message de confirmation de mise à jour de l'information de contexte PDP par ledit noeud GGSN.

5. Procédé selon l'une quelconque des revendications 2 à 4. **caractérisé en ce qu'**après la mise à jour de ladite information d'emplacement, ledit serveur AAA (SA) transmet un message de confirmation de mise à jour à ladite passerelle de terminaison de tunnel (TTG).

6. Procédé selon l'une quelconque des revendications 1 à 5, **caractérisé en ce que** dans l'étape iii), ladite passerelle de terminaison de tunnel (TTG) transmet audit noeud SGSN un message demandant au moins l'information définissant ledit service courant de la part de ladite station mobile, (MS) et au moins un identifiant de communication de la part dudit noeud GGSN.

7. Procédé selon l'une quelconque des revendications 1 à 6, **caractérisé en ce que** dans l'étape i), ladite passerelle de terminaison de tunnel (TTG) transmet audit serveur AAA (SA) un message demandant simultanément ladite autorisation d'établissement d'un tunnel de bout en bout et ladite information d'emplacement.

8. Procédé selon l'une quelconque des revendications 1 à 7, **caractérisé en ce que** dans l'étape ii), ledit serveur AAA (SA) transmet à ladite passerelle de terminaison de tunnel (TTG) un message d'autorisation contenant à la fois ladite autorisation d'établissement d'un tunnel de bout en bout et ladite information d'emplacement

9. Procédé selon l'une quelconque des revendications 1 à 8, **caractérisé en ce que** ladite information d'emplacement définit une adresse IP et/ou un identifiant RNIS dudit noeud SGSN.

10. Procédé selon l'une quelconque des revendications 1 à 9, **caractérisé en ce que** dans l'étape iv), un tunnel GTP est établi entre ladite passerelle de terminaison de tunnel (TTG) et ledit noeud GGSN.

11. Passerelle de terminaison de tunnel (TTG) pour un réseau de communication mobile, **caractérisée en ce qu'**elle comprend :
- moyens de traitement (MT) adaptés, dans le cas de la réception d'une demande d'établissement d'un tunnel de bout en bout envoyée par une station mobile (MS) au moment d'une tentative de transfert depuis ledit réseau mobile vers un réseau local sans fil d'une session de communication en rapport avec un service impliquant cette station mobile (MS) ainsi que les noeuds SGSN et GGSN dudit réseau mobile, pour i) Générer un message vers un serveur AAA (SA) dudit réseau mobile demandant une information d'emplacement pour ledit noeud SGSN, et dans le cas de la réception d'une autorisation d'établissement dudit tunnel et de ladite information d'emplacement de la part dudit serveur AAA (SA), ii) Générer un message vers ledit noeud SGSN demandant au moins une partie d'un contexte de service de ladite station mobile (MS), et
- moyens d'établissement de tunnel (MET) adaptés, dans le cas de la réception dudit contexte, pour établir ledit tunnel de bout en bout avec ladite station mobile (MS) ainsi qu'un tunnel avec ledit noeud GGSN afin de garantir la continuité dudit service pendant le transfert de ladite session de communication.

12. Passerelle selon la revendication 11, **caractérisée en ce que** lesdits moyens de traitement (MT) sont adaptés pour générer un message vers ledit serveur AAA (SA) contenant une information qui signale que ladite passerelle a été replacée pour ledit noeud SGSN pour la gestion dudit service impliquant ladite station mobile (MS) et ledit noeud GGSN, afin que ledit serveur MA (SA) mette à jour ladite information d'emplacement dans un serveur d'emplacement (HLR) dudit réseau mobile en fonction de ladite information de mise à jour transmise.

13. Passerelle selon la revendication 12, **caractérisée en ce que** lesdits moyens de traitement (MT) sont adaptés pour générer un message de signalisation vers ledit serveur AAA (SA) contenant une adresse IP et/ou un identifiant RNIS de leur passerelle (TTG).

14. Passerelle selon l'une quelconque des revendications 12 et 13, **caractérisée en ce que** lesdits moyens de traitement (MT) sont adaptés pour générer ledit message contenant l'information de mise à jour sur réception d'un message de confirmation de mise à jour de l'information de contexte PDP de la part dudit noeud, GGSN,

15. Passerelle selon l'une quelconque des revendications 11 à 14. **caractérisée en ce que** lesdits moyens de traitement (MT) sont adaptés pouf générer un message vers ledit noeud SGSM demandant au moins l'information définissant ledit service courait de la part de ladite station mobile (MS) et au moins un identifiant de communication de la part dudit noeud GGSN.

16. Passerelle selon l'une quelconque des revendications 11 à 15, **caractérisée en ce que** lesdits moyens de traitement (MT) sont adaptés pour générer un message audit serveur AAA (SA) demandant simultanément ladite autorisation d'établissement d'un tunnel de bout en bout et ladite information d'emplacement

17. Passerelle selon l'une quelconque des revendications 11 à 16, **caractérisée en ce que** ladite information d'emplacement définit une adresse IP et/ou un identifiant RNIS dudit noeud SGSN.

18. Passerelle selon l'une quelconque des revendications 11 à 17, **caractérisée en ce que** lesdits moyens d'établissement de tunnel (MET) sont adaptés pour établir un Tunnel GTP avec ledit noeud GGSN.
